Europäisches Patentamt

European Patent Office

Office européen des brevets

(19)

(11) Numéro de publication : **0 170 561 B1**

# FASCICULE DE BREVET EUROPÉEN

(12)

(45) Date de publication du fascicule du brevet :
28.09.88

(51) Int. Cl.⁴ : **G 02 B   6/00**, G 02 B 19/00,
G 02 B   5/00

(21) Numéro de dépôt : 85401272.1

(22) Date de dépôt : 25.06.85

(54) **Dispositif concentrateur et/ou déconcentrateur de radiations multidirectionnel non imageur.**

(30) Priorité : 29.06.84 FR 8410386

(43) Date de publication de la demande :
05.02.86 Bulletin 86/06

(45) Mention de la délivrance du brevet :
28.09.88 Bulletin 88/39

(84) Etats contractants désignés :
AT BE CH DE GB IT LI LU NL SE

(56) Documents cités :
US-A- 3 535 016
US-A- 3 756 688
US-A- 3 823 995
US-A- 4 076 378

(73) Titulaire : Blanc, Michel
111 Boulevard Longchamp
F-13001 Marseille (FR)

Poilard, Jean
27, rue du Parc à Foulons
F-91120 Villebon-sur-Yvette (FR)

Marchand, Gérard
Villa 57 ies Bougainvillées Avenue Rampal
F-13002 Marseille (FR)

Henri, René
7 Allée Pasteur
F-13830 Rocquefort-la-Bedoule (FR)

(72) Inventeur : Blanc, Michel
111 Boulevard Longchamp
F-13001 Marseille (FR)
Inventeur : Pollard, Jean
27, rue du Parc à Foulons
F-91120 Villebon-sur-Yvette (FR)
Inventeur : Marchand, Gérard
Villa 57 ies Bougainvillées Avenue Rampal
F-13002 Marseille (FR)
Inventeur : Henri, René
7 Allée Pasteur
F-13830 Rocquefort-la-Bedoule (FR)

(74) Mandataire : Caunet, Jean et al
Cabinet BEAU DE LOMENIE 55, rue d'Amsterdam
F-75008 Paris (FR)

## Description

La présente invention concerne un dispositif concentrateur et/ou déconcentrateur de radiations multidirectionnel non imageur.

Un dispositif concentrateur de radiations est un système qui permet de faire croître la densité de puissance en conservant l'énergie émise par une source sur un élément donné ; en d'autres termes, de multiplier par un facteur C > 1 l'éclairement obtenu sur cet élément à partir de la source seule.

Un dispositif déconcentrateur de radiations est un système qui permet de faire décroître la densité de puissance en conservant l'énergie émise par une source sur un élément donné ; en d'autres termes, de diviser par un facteur C > 1 l'éclairement obtenu sur cet élément à partir de la source seule. Ce dispositif déconcentrateur devient distributeur lorsque la déconcentration s'accompagne d'une modulation contrôlée de la répartition de cette densité, par exemple pour parvenir à une uniformité de densité sur une surface donnée.

Les dispositifs concentrateurs connus se répartissent en deux groupes : les imageurs et les non-imageurs.

Les dispositifs concentrateurs imageurs comportent des lentilles et des miroirs, connus depuis fort longtemps, à l'aide desquels l'image de la source se trouve reformée sur un récepteur de forme et de dimensions données.

Ils permettent d'atteindre une concentration élevée (pouvant aller de quelques unités à plusieurs milliers) en fonction de la surface collectrice de l'optique et de la dimension de l'image de la source ; en d'autres termes, de son ouverture, rapport entre son diamètre et sa focale.

Mais la position de l'image est liée à la position de la source par rapport à l'axe optique du concentrateur. Le récepteur ayant une dimension finie, donc limitée, cela impose au concentrateur de suivre la source si elle se déplace. Dans le cas des sources étendues (lumière diffuse), la concentration est faible, voisine de 1. Enfin, l'image présente la même topographie d'éclairement que la source.

Des dispositifs concentrateurs non imageurs sont connus par le brevet français FR-A-1 543 165. Ils comportent, soit des troncs de cône de révolution à paroi métallique réfléchissante, soit des troncs de cône de révolution en verre. Dans les deux cas, la surface d'entrée est supérieure à la surface de sortie et l'angle d'acceptance des rayons à l'entrée est inférieur à l'angle d'émergence à la sortie. Les concentrateurs du deuxième type ont été améliorés sur le plan de la concentration, en remplaçant le tronc de cône par un tronc de paraboloïde de révolution, puis par des associations de troncs de cône et de troncs de paraboloïde en série, chaque élément étant constitué par un bloc homogène et transparent en un matériau de même indice de réfraction, mais cet indice pouvant varier d'un élément à l'autre. Il a également été essayé des troncs de cône constitués par des strates d'indice croissant de l'entrée à la sortie, perpendiculairement à l'axe du tronc de cône.

L'éclairement obtenu en sortie est quasi uniforme sur toute la surface. Le récepteur peut donc être facilement positionné à la sortie du concentrateur.

Mais, avec ces concentrateurs non imageurs, il est nécessaire également de suivre la source si elle se déplace, avec toutefois moins de précision que précédemment.

La concentration maximale théorique est donnée par la relation (principe de Clausius) :

$$C = (n' \, Sin \, U'/n \, Sin \, U)^2$$

dans laquelle n et n' sont respectivement les indices de réfraction du tronc de cône (ou tronc de paraboloïde) et du milieu de sortie ; U et U' sont respectivement les demi-angles au sommet du cône d'acceptance dans le tronc de cône et d'émergence dans le milieu de sortie.

La concentration est faible et l'angle d'acceptance également. Ainsi, pour le tronc de cône, la concentration est de l'ordre de 2 pour n = 1,5 avec un angle solide d'acceptance de l'ordre de 1/6e de Stéradian. Par contre, l'angle solide d'émergence est élevé, pratiquement 2 π Stéradian dans l'air, ce qui nécessite une adaptation des indices du tronc du cône et du récepteur (liquide d'immersion).

L'adjonction de lentilles à l'entrée et à la sortie d'un tronc de cône (ou tronc de paraboloïde) permet d'augmenter considérablement la concentration et de diminuer l'angle d'émergence, mais en réduisant d'autant l'angle d'acceptance qui n'est plus que de quelques centièmes de Stéradian.

Les concentrations maximales théoriques citées ci-dessus sont loin d'être obtenues dans la réalisation, car cela suppose des composants sans défauts et un alignement parfait dans la direction de la source.

La présente invention a pour but de réunir les avantages des deux types de systèmes existants précipités sans en présenter les inconvénients, à savoir de parvenir à une concentration élevée sans limitation de directivité.

Dans ce but, la présente invention propose un dispositif concentrateur et/ou déconcentrateur de radiations multidirectionnel non imageur comprenant, comme les troncs de cône concentrateurs connus à surface réfléchissante ou à bloc transparent, en prolongement d'un conducteur de radiations de section constante, au moins une interface de confinement de radiations, de forme tronconique dont les directrices et les génératrices peuvent être quelconques et dont l'extrémité évasée est opposée au conducteur.

Le brevet US-A-4 076 378 décrit un dispositif transmetteur de points d'image à écartement variable et contrôlé. Ce dispositif comporte des fibres tronconiques qui contrôlent justement les écartements d'entrée et de sortie des points d'image par le taquage de leurs extrémités amincies et de leurs extrémités évasées. Chaque fibre comporte trois couches d'indices de réfraction différents décroissant du centre vers la périphérie pour que la lumière se réfléchisse, dans la partie amincie de la longueur, sur l'interface périphérique et, dans la partie évasée de sa longueur, sur l'interface centrale de section réduite, cette zone centrale de transmission étant entourée par une zone optiquement inactive s'étendant entre les deux interfaces. Ce dispositif est donc un transmetteur de lumière fonctionnant dans les deux sens entre l'extrémité amincie et l'extrémité évasée, mais sans concentration, ni déconcentration d'énergie.

Le dispositif concentrateur et/ou déconcentrateur de l'invention met en œuvre, comme le dispositif transmetteur du brevet US précité, deux interfaces, mais pour confiner différemment les radiations et les propager indifféremment dans un sens ou dans le sens opposé afin d'obtenir une concentration ou une déconcentration d'énergie et dans certains cas les deux simultanément.

Conformément à l'invention, le dispositif comporte au moins une deuxième interface de confinement de radiations de forme conique située à l'intérieur de la première interface, dont l'extrémité évasée est également opposée au conducteur et dont la petite extrémité est située à l'intérieur de la première interface et par conséquent à l'extérieur du conducteur, la distance entre ces deux interfaces de confinement de radiations étant sensiblement constante et lesdites deux interfaces étant orientées l'une par rapport à l'autre de façon telle que les radiations sont confinées entre celles-ci et se propagent à partir de l'extrémité évasée des interfaces jusqu'au conducteur en s'accompagnant de leur concentration, et/ou à partir du conducteur jusqu'à ladite extrémité évasée en s'accompagnant de leur déconcentration.

Un tel dispositif ainsi perfectionné permet d'obtenir un angle d'acceptance élevé, pouvant atteindre jusqu'à la totalité du demi-espace frontal. Cette propriété permet de concentrer aussi bien les sources ponctuelles que les sources étendues et d'utiliser le concentrateur dans une position fixe, choisie très simplement.

En outre, l'éclairement est uniforme à la sortie quelles que soient la ou les sources.

Par ailleurs, la concentration est élevée, théoriquement illimitée pour une configuration donnée puisque uniquement fonction du rapport des surfaces d'entrée et de sortie, ou en plaçant plusieurs systèmes en série.

Le dispositif de l'invention peut être distributeur et, à cet effet, la forme des directrices (ovale, elliptique, carrée, rectangulaire...) et des génératrices (droite, brisée, incurvée...) des interfaces est déterminée pour traiter l'énergie lors de la déconcentration (recueillir, dévier, mélanger...).

De telles structures élémentaires à deux interfaces de confinement peuvent être couplées :

— en parallèle, la première interface d'une structure étant contiguë à la deuxième interface de la structure qui l'enveloppe et toutes les premières interfaces étant raccordées au même conducteur de radiations,

— ou en série, le conducteur de l'une étant raccordé à l'extrémité évasée de l'autre,

— ou encore, à la fois en série et en parallèle.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :

— la figure 1 est un schéma explicatif permettant d'appréhender le principe de l'invention,

— la figure 2 est une perspective illustrant une première forme de réalisation du dispositif de l'invention, à base de matériaux transparents d'indices de réfraction différents,

— les figures 3 et 3A sont des perspectives montrant une deuxième forme de réalisation et une variante du dispositif à base de surfaces réfléchissantes,

— la figure 4 est un graphique représentant la variation de la concentration C en fonction du demi-angle au sommet A du tronc de cône par deux courbes 1 et 2 dont les points significatifs sont marqués par des petits ronds pour un tronc de cône classique et respectivement des petites croix pour un dispositif selon l'invention,

— la figure 5 est un schéma en demi-perspective, demi-coupe d'un couplage en parallèle de deux structures élémentaires : enveloppe-noyau,

— la figure 6 est une vue analogue à la figure 5 concernant un couplage en série d'une structure élémentaire collectrice avec des structures élémentaires dérivées.

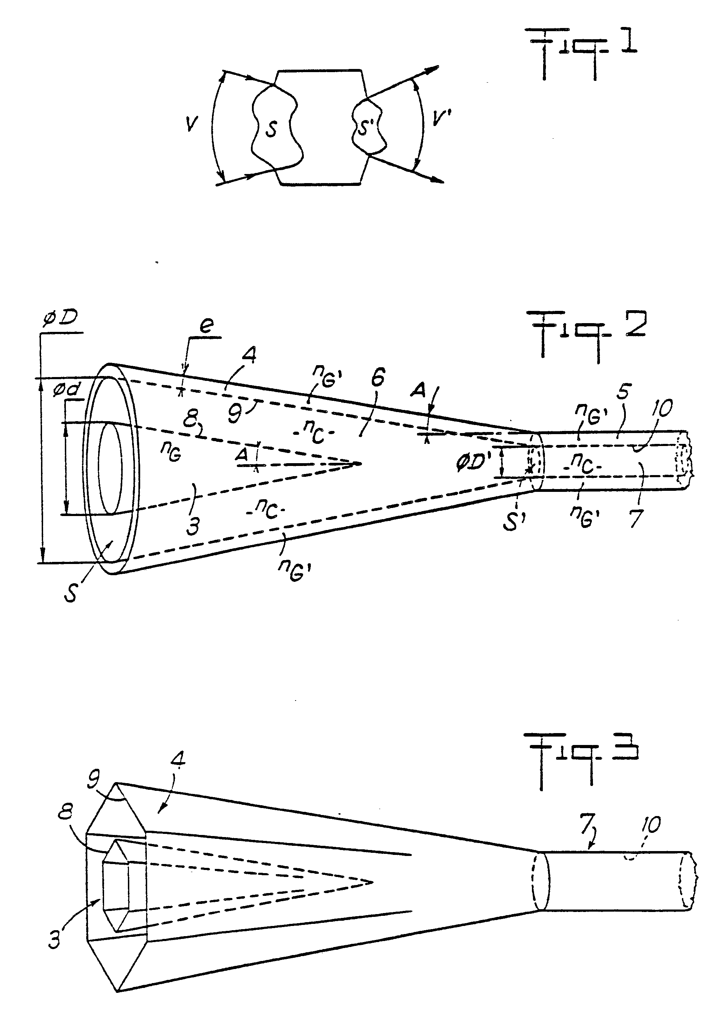

Le dispositif concentrateur décrit dans ce qui suit est un élément optique passif permettant de collecter à travers une surface S l'énergie radiative comprise dans un angle solide V et de le redistribuer intégralement ou partiellement à travers une surface S', dans un angle solide V' (figure 1). Si $E_S$ et $E_{S'}$ sont les éclairements respectifs des surfaces S et S', la concentration C est définie comme étant le rapport $E_{S'}/E_S$. Le système est concentrateur si C est supérieur à 1. Le système étant passif, cela suppose évidemment que la surface S' soit inférieure à la surface S.

Un tel système peut être utilisé depuis les rayons X jusqu'aux ondes centimétriques (radar), en passant par l'ultraviolet, le visible et l'infrarouge, la seule condition étant d'utiliser des matériaux compatibles avec le domaine spectral choisi.

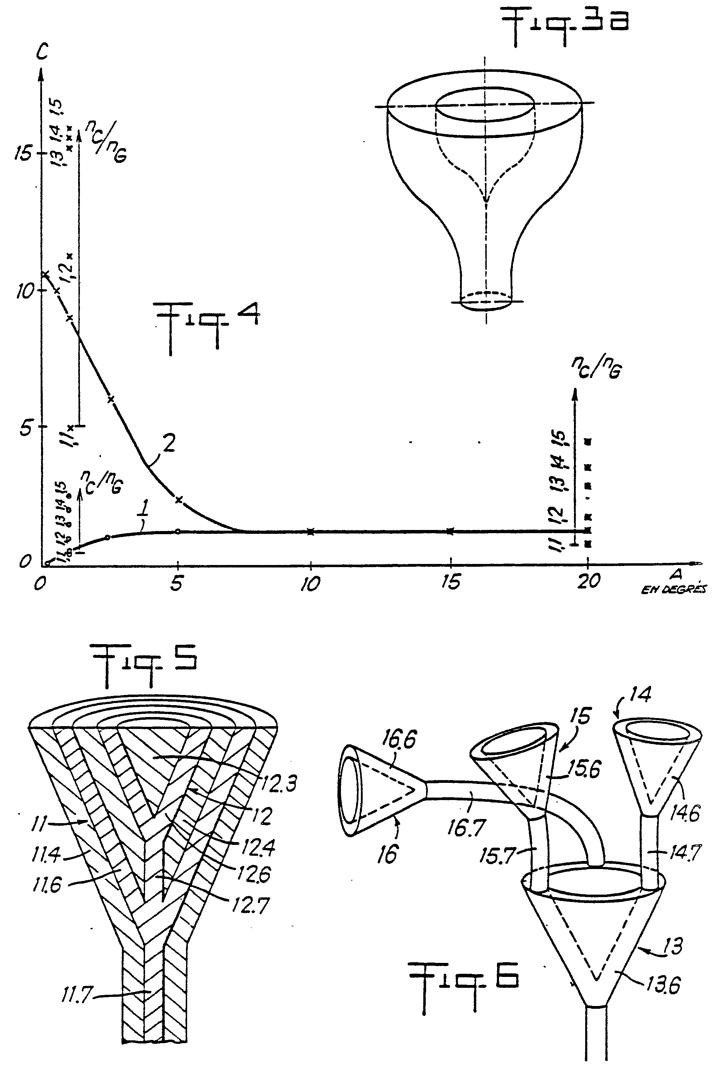

Suivant la forme de réalisation illustrée par la figure 2, le dispositif concentrateur consiste essentiellement en un système tronconique de révolution en matériaux transparents dans le domaine spectral choisi.

Il comporte :

— un noyau central 3 de diamètre extérieur d, de demi-angle au sommet A et d'indice de réfraction $n_G$, se terminant en pointe,

— une enveloppe tronconique périphérique 4 de diamètre intérieur d'entrée D, de diamètre intérieur de sortie D' (D' étant inférieur à D), de demi-angle au sommet A (le même que le précédent, de sorte que les génératrices de la surface interne de l'enveloppe sont parallèles à celles de la surface externe du noyau dès lors que celui-ci est emboîté coaxialement dans l'enveloppe) et d'indice de réfraction $n_{G'}$, se terminant par une enveloppe tubulaire cylindrique 5 de même indique, et,

— un entonnoir tubulaire tronconique 6 remplissant l'espace compris entre l'enveloppe 4 et le noyau 3, cet entonnoir ayant une épaisseur sensiblement uniforme en regard du noyau et un indice de réfraction $n_C$, ledit entonnoir se prolongeant en outre par une fibre optique 7 de même indice s'étendant dans l'enveloppe 5 précitée.

Bien entendu, pour que les radiations se propagent par réflexion totale sur les interfaces 8 et 9 constituées par la surface externe du noyau 3 et la surface interne de l'enveloppe 4, il faut que :

$$n_{\text{milieu extérieur}} \leqslant n_G < n_C$$

et

$$n_{\text{milieu extérieur}} \leqslant n_{G'} < n_C$$

le milieu extérieur étant généralement de l'air, son indice est égal à 1, et, le noyau étant généralement constitué par la même matière que l'enveloppe, $n_G$ est alors égal à $n_{G'}$.

Dans le cas défini ci-dessus, la réflexion totale est franche et s'effectue par « saut d'indice » de $n_C$ à $n_G$ et de $n_C$ à $n_{G'}$.

Mais l'invention s'applique également dans le cas où la réflexion totale procède par infléchissements successifs et s'effectue alors par « gradient d'indice » en intervenant sur la matière située à la frontière des interfaces pour que son indice de réfraction varie non pas brusquement, mais suivant une certaine progressivité.

Cette réflexion totale s'applique non seulement aux interfaces 8 et 9 du dispositif, mais également à l'interface 10 du conducteur de radiations qui, dans la première forme de réalisation, est constitué par la fibre optique 7 gainée par l'enveloppe 5.

Suivant la deuxième forme de réalisation illustrée par la figure 3, le dispositif concentrateur consiste essentiellement en un système tronconique dont l'extrémité évasée est hexagonale, dont la petite extrémité raccordée au conducteur de radiations est circulaire et dont les génératrices sont sensiblement droites, ce système étant en matériaux parfaitement réfléchissants dans le domaine spectral choisi.

Il s'agit alors d'une réflexion du type métallique ou du type sélectif interférentiel par un choix judicieux de couches minces déposées à la ou les interfaces.

Dans cette deuxième forme de réalisation, on retrouve donc l'interface 8 du noyau 3, l'interface 9 de l'enveloppe 4 et l'interface 10 du conducteur 7.

Quelle que soit la forme de réalisation choisie, l'une au moins quelconque des interfaces 8, 9 et 10 peut être sur une partie seulement de son étendue (longueur et/ou périphérie) d'un certain type (réfraction, réflexion métallique, réflexion sélective interférentielle...) et sur une autre partie, d'un autre type.

Par ailleurs, quelle que soit la forme de réalisation choisie, le dispositif en tant que structure élémentaire comporte une enveloppe 4 dont l'interface 9 est une surface conique de directrices et de génératrices quelconques, cette propriété se retrouvant pour l'interface 8 du noyau 3 qui est sensiblement équidistante de l'interface 9 précitée.

Ainsi, la directrice peut être circulaire (figure 2), ovale, elliptique, carrée, rectangulaire, hexagonale (figure 3) ou autres ; les génératrices peuvent être droites (figures 2 et 3), brisées, incurvées (figure 3A) ; la directrice peut évoluer par sa forme le long de l'axe (figure 3) et les génératrices s'adapter à cette évolution par leur forme et leur orientation.

Ce dispositif concentrateur tronconique réfléchissant (figures 1 et 2) utilise la propriété d'un tronc de cône de passer de l'une à l'autre de ses surfaces limitrophes, extérieure et intérieure, mais également la propriété de la fibre optique de faire cheminer sans perte les rayons dans le milieu d'indice $n_C$, par réflexions successives sur les interfaces 8 et 9 des milieux d'indices $n_C$ et $n_G$, respectivement $n_C$ et $n_{G'}$.

On peut l'assimiler à une terminaison originale d'une fibre optique, permettant de concentrer de l'énergie dans la fibre ou au contraire de la déconcentrer à partir de celle-ci.

Les courbes 1 et 2 du graphique de la figure 4 montrent la variation de la concentration C en fonction du demi-angle au sommet A d'un tronc de cône classique (courbe 1 aux points significatifs marqués de petits ronds) et d'un dispositif de l'invention (courbe 2 aux points significatifs marqués de petites croix). Pour ces deux courbes 1 et 2, d = D/2, D/D' = 5. Le demi-angle A varie de 0° à 20°. Les indices de réfraction ont pour valeurs $n_C = 1,6$ et $n_G = n_{G'} = 1,4$, soit un rapport $n_C/n_G = 1,143$, ce qui donne un demi-angle au sommet du cône d'acceptance de 51 degrés.

Dans cet exemple illustré par les courbes 1 et 2, on constate que, pour A supérieure à 7°, le tronc de cône classique et le dispositif de l'invention donnent la même concentration C voisine de 1,2.

Par contre, pour les angles A inférieurs à 7°, le dispositif de l'invention se révèle très supérieur, permettant d'atteindre une concentration C = 10 pour un angle A = 30', alors que le tronc de cône classique ne permet d'atteindre pour le même angle que 0,3.

Ces concentrations sont obtenues pour une source uniforme étendue couvrant tout l'angle d'acceptance du dispositif.

Ce phénomène est généralisé et, pour s'en convaincre, il faudrait examiner le réseau des courbes 1 et 2 obtenu en faisant varier le rapport des indices. Pour plus de clarté, ce réseau n'a pas été représenté sur la figure 4. Mais, des points significatifs ont été marqués sur le graphique pour les valeurs de A égales à 1° et 20°, le rapport $n_C/n_G$ étant indiqué pour chacun de ces points par des axes d'ordonnées partiels.

On s'aperçoit alors que les dispositifs de l'invention et le tronc de cône classique sont sensiblement équivalents pour les valeurs A supérieures à 5°. Par exemple, à 2° 30', ce dispositif de l'invention permet d'atteindre une concentration C = 16 pour un rapport $n_C/n_G = 1,3$, ce qui donne un demi-angle au sommet du cône d'acceptance de 56 degrés.

La valeur de la concentration peut être optimisée pour chaque couple d'indices en jouant sur les rapports d/D et S/S'.

Dans l'infrarouge, un dispositif à entonnoir en germanium ($n_C = 4$) plongé dans l'air ($n_G = 1$) donne, pour un angle A = 2° 30' et un rapport d/D = 5,8, une concentration de 15 environ.

Il est bien évident que le dispositif concentrateur en tant que structure élémentaire est celui illustré par la figure 2 ou la figure 3. Mais, ce dispositif peut être plus complexe et constitué par plusieurs structures élémentaires.

Suivant la forme de réalisation schématisée sur la figure 5, deux structures élémentaires 11 et 12 sont montées en parallèle. Dans ce cas, l'entonnoir 11.6 de la structure 11 se prolongeant par la fibre optique 11.7 est interposé entre l'enveloppe 11.4 de cette structure et son noyau formant l'enveloppe 12.4 de la structure coaxiale 12, l'entonnoir 12.6 de cette structure 12 solidaire d'un prolongement 12.7 de la fibre 11.7 est interposé entre ce noyau-enveloppe 12.4 et le noyau 12.3 de ladite structure 12.

En d'autres termes, la première interface de confinement 9 de la structure 12 est contiguë à la deuxième interface de confinement 8 de la structure qui l'enveloppe et toutes les premières interfaces étant raccordées à l'interface 10 du conducteur de radiations 7.

Bien entendu, davantage de structures élémentaires peuvent être montées en parallèle par emboîtement coaxial, toutes ces structures définissant suivant leur axe une fibre optique commune.

Suivant la forme de réalisation schématisée sur la figure 6, le dispositif comporte une structure élémentaire collectrice 13 sur l'entonnoir 13.6 de laquelle sont montées en série les fibres optiques 14.7, 15.7, 16.7... des entonnoirs 14.6, 15.6, 16.6... de plusieurs structures élémentaires dérivées 14, 15, 16..., chacune desquelles pouvant coopérer avec d'autres structures dérivées.

Le dispositif de l'invention, qu'il soit élémentaire ou complexe, peut être assimilé à une terminaison originale d'une fibre optique, permettant de concentrer de l'énergie dans la fibre ou au contraire de la déconcentrer, suivant que le flux de radiations pénètre par l'extrémité évasée du dispositif ou respectivement par la fibre optique ; il permet, dans certains cas, de combiner simultanément ces deux fonctions, par exemple pour éclairer une surface et, dans le même temps, recueillir l'énergie réfléchie par cette surface. Dès lors, ce dispositif doit être considéré comme concentrateur et/ou déconcentrateur de radiations.

Le dispositif de l'invention peut être appliqué dans de nombreux domaines industriels, tels que ceux évoqués dans ce qui suit :

— de la visualisation : transport, agrandissement ou réduction d'images naturelles ou synthétiques, écrans plats...

— de l'éclairage : captation, collection, transport, déviation, concentration, mélange d'énergies lumineuses à différentes longueurs d'ondes en vue de l'éclairement de surfaces, de volumes à partir de sources ponctuelles ou diffuses...

— de l'énergétique : captation, collection, concentration, transport d'énergie radiative même diffusée pour son utilisation ou sa transformation locale... Exemples : chauffage par énergie solaire (même par soleil voilé), utilisation de cellules solaires au silicium sous haute concentration...

— de l'instrumentation : collection d'énergie de très faible niveau, spectroscopie, astronomie...

— de l'opto-électronique : composants d'extrémité pour fibres optiques de transmission d'information (liaison, injection de signaux lumineux, couplage...)...

— des micro-ondes : concentrateurs hyper-fréquences.

**Revendications**

1. Dispositif concentrateur et/ou déconcentrateur de radiations multidirectionnel non imageur, comprenant, en prolongement d'un conducteur de radiation (7) de section constante, au moins une interface de confinement de radiations (9), de forme tronconique, dont les directrices et les génératrices peuvent être quelconques, et dont l'extrémité évasée est opposée au conducteur, caractérisé en ce qu'il comporte au moins une deuxième interface de confinement de radiations (8) de forme conique, située à l'intérieur de la première interface, dont l'extrémité évasée est également opposée au conducteur et dont la petite extrémité est située à l'intérieur de la première interface (9) et par conséquent à l'extérieur du conducteur (7), la distance entre ces deux interfaces de confinement de radiations étant sensiblement constante et lesdites deux interfaces étant orientées l'une par rapport à l'autre de façon telle que les radiations sont confinées entre celles-ci et se propagent à partir de l'extrémité évasée (S) des interfaces jusqu'au conducteur en s'accompagnant de leur concentration, et/ou à partir du conducteur jusqu'à ladite extrémité évasée en s'accompagnant de leur déconcentration.

2. Dispositif selon la revendication 1, caractérisé en ce que l'une au moins des interfaces (8, 9 de la figure 3) est, sur une partie au moins de son étendue, du type à réflexion métallique.

3. Dispositif selon la revendication 1, caractérisé en ce que l'une au moins des interfaces (8, 9 des figures 2 et 5) est, sur une partie au moins de son étendue, du type à réflexion interne totale, cette réflexion interne totale étant assurée par le fait que le milieu situé entre les deux interfaces est constitué en un matériau transparent d'indice de réfraction ($n_C$) supérieur aux indices de réfraction ($n_G$ et $n_{G'}$) des matériaux constitutifs des milieux situés à l'extérieur desdites interfaces.

4. Dispositif selon la revendication 1, caractérisé en ce que l'une au moins des interfaces (8, 9 de la figure 2 ou 3) est sur une partie au moins de son étendue du type à réflexion sélective interférentielle.

5. Dispositif selon la revendication 3, caractérisé en ce que l'une au moins des interfaces est du type à « saut d'indice ».

6. Dispositif selon la revendication 3, caractérisé en ce que l'une au moins des interfaces est du type à « gradient d'indice ».

7. Dispositif selon la revendication 1, caractérisé en ce que la forme des directrices (ovale, elliptique, carrée, rectangulaire...) et des génératrices (droite, brisée, incurvée...) des interfaces est déterminée pour traiter l'énergie lors de la déconcentration (recueillir, dévier, mélanger...) et par conséquent la distribuer selon le résultat recherché.

8. Ensemble concentrateur et/ou déconcentrateur, caractérisé en ce qu'il comporte plusieurs structures élémentaires (11, 12) selon la revendication 1 ou 7, à deux interfaces (8, 9) chacune, montées en parallèle, la première interface (9) d'une structure étant contiguë à la deuxième interface (8) de la structure qui l'enveloppe, et toutes les premières interfaces étant raccordées au même conducteur de radiations (7).

9. Ensemble concentrateur et/ou déconcentrateur, caractérisé en ce qu'il comporte au moins deux structures élémentaires (13 et 14) selon la revendication 1 ou 7, à deux interfaces (8, 9) chacune, montées en série, le conducteur de l'une étant raccordé à l'extrémité évasée de l'autre.

10. Ensemble selon la revendication 9, caractérisé en ce que plusieurs structures élémentaires (14 à 16) à deux interfaces (8, 9) sont montées en parallèle sur l'extrémité évasée d'une structure élémentaire commune (13) à deux interfaces (8, 9).

**Claims**

1. Multi-directional non-imaging radiations concentrator and/or deconcentrator device, comprising in extension of a radiations conductor (7) of constant cross-section, at least one radiations-confining interface (9) of truncated shape, having directrices and generatrices of any form, the widened end of which is opposite the conductor, characterized in that it comprises at least one second radiations-confining interface (8) of conical shape, situated inside the first interface, the widened end of which is also opposite the conductor and the small end of which is situated inside the first interface (9) and consequently outside of the conductor (7), the distance between said two radiations-confining interfaces being substantially constant and said two interfaces facing in such a way that the radiations are confined between them and propagate from the widened end (S) of the interfaces to the conductor while concentrating, and/or from the conductor up to the widened end while deconcentrating.

2. Device according to claim 1, characterized in that the surface of at least one of the interfaces (8, 9 of figure 3) is at least partly of the metallic reflection type.

3. Device according to claim 1, characterized in that the surface of at least one of the interfaces (8, 9 of figures 2 and 5) is at least partly of the total inner reflection type, this total inner reflection being ensured by the fact that the medium situated between the two interfaces is constituted of a transparent material of refraction index ($n_C$) greater than the refraction indices ($n_G$ and $n_{G'}$) of the materials constituting the mediums situated outside of said interfaces.

4. Device according to claim 1, characterized in that the surface of at least one of the interfaces (8, 9 of figure 2 or 3) is at least partly of the interferential selective reflection type.

5. Device according to claim 3, characterized in that at least one of the interfaces is of the « step index » type.

6. Device according to claim 3, characterized in that at least one of the interfaces is of the « gradient index » type.

7. Device according to claim 1, characterized in that the shape of the directrices (oval, elliptic, square, rectangular...) and of the generatrices (straight, jagged, incurved...) of the interfaces is determined to treat the energy during deconcentration (collection, deflection, mixing...) and consequently to distribute it according to the result wanted.

8. Concentrating and/or deconcentrating assembly, characterized in that it comprises a plurality of elementary structures (11, 12) according to claim 1 or 7, having each two interfaces (8, 9) mounted in parallel, the first interface of a structure (9) being contiguous to the second interface (8) of the structure surrounding it, and all first interfaces being connected to the same radiations conductor (7).

9. Concentrating and/or deconcentrating assembly, characterized in that it comprises at least two elementary structures (13 and 14) according to claim 1 or 7, with two interfaces each, mounted in series, the conductor of one structure being connected to the widened end of the other one.

10. Assembly according to claim 9, characterized in that a plurality of elementary structures (14 to 16) with two interfaces (8, 9) are mounted in parallel on the widened end of a common elementary structure (13) having two interfaces (8, 9).

**Patentansprüche**

1. Bildlos-Vorrichtung zur Bündelung und/oder Entbündelung von in viele Richtungen gerichteten Strahlen, umfassend in Verlängerung eines Strahlenleiters (7) von konstantem Querschnitt mindestens eine Strahleneinschluß-Zwischenfläche (9) in Kegelstumpfform, deren Leitlinien und Erzeugende beliebig sein können und deren trichterförmig erweitertes Ende vom Leiter abgewandt ist, dadurch gekennzeichnet, daß sie mindestens eine zweite Strahleneinschluß-Zwischenfläche (8) von konischer Form umfaßt, die sich innerhalb der ersten Zwischenfläche befindet, deren trichterförmig erweitertes Ende ebenfalls vom Leiter abgewandt ist und deren kleines Ende innerhalb der ersten Zwischenfläche (9) und infolgedessen außerhalb des Leiters (7) angeordnet ist, wobei der Abstand zwischen diesen beiden Strahleneinschluß-Zwischenflächen im wesentlichen konstant ist und die beiden Zwischenflächen derart zueinander gerichtet sind, daß die Strahlen zwischen diesen eingeschlossen werden und sich unter begleitender Bündelung vom erweiterten Ende (S) der Zwischenflächen bis zum Leiter und/oder unter begleitender Entbündelung vom Leiter zum erweiterten Ende fortsetzen.

2. Vorrichtung nach Anspruch 1, dadurch gekennzeichnet, daß mindestens eine der Zwischenflächen (8, 9 der Fig. 3) über zumindest einen Teil ihrer Erstreckung des Typs mit Metallreflexion ist.

3. Vorrichtung nach Anspruch 1, dadurch gekennzeichnet, daß mindestens eine der Zwischenflächen (8, 9 der Fig. 2 und 5) über zumindest einen Teil ihrer Erstreckung des Typs mit totaler Innenreflexion ist, wobei diese totale Innenreflexion dadurch gewährleistet ist, daß das zwischen den beiden Zwischenflächen befindliche Milieu aus einem transparentem Material mit einem höheren Brechungskoeffizienten ($n_C$) als die Brechungskoeffizienten ($n_G$ und $n_{G'}$) der die Medien außerhalb dieser Zwischenflächen bildenden Materialien gebildet ist.

4. Vorrichtung nach Anspruch 1, dadurch gekennzeichnet, daß mindestens eine der Zwischenflächen (8, 9 der Fig. 2 oder 3) über zumindest einen Teil ihrer Erstreckung des Typs mit selektiver Interferenz-Reflexion ist.

5. Vorrichtung nach Anspruch 3, dadurch gekennzeichnet, daß mindestens eine der Zwischenflächen des Typs mit « Stufenprofil » ist.

6. Vorrichtung nach Anspruch 3, dadurch gekennzeichnet, daß mindestens eine der Zwischenflächen des Typs mit « Stufenverlauf » ist.

7. Vorrichtung nach Anspruch 1, dadurch gekennzeichnet, daß die Form der Leitlinien (oval, elliptisch, quadratisch, rechteckig, ...) und der Erzeugenden (gerade, gebrochen, gekrümmt, ...) der Zwischenflächen zum Aufbereiten der Energie bei der Entbündelung (Sammeln, Ableiten, Mischen, ...) und infolgedessen zum Verteilen derselben entsprechend dem gewünschten Ergebnis festgelegt ist.

8. Bündler- und/oder Entbündler-Gruppe, dadurch gekennzeichnet, daß sie mehrere Elementarstrukturen (11, 12) nach Anspruch 1 oder 7 mit jeweils zwei Zwischenflächen (8, 9) in paralleler Anordnung umfaßt, wobei die erste Zwischenfläche (9) einer Struktur an die zweite Zwischenfläche (8) der sie umhüllenden Struktur stößt, und alle ersten Zwischenflächen an denselben Strahlenleiter (7) angeschlossen sind.

9. Bündler- und/oder Entbündler-Gruppe, dadurch gekennzeichnet, daß sie mindestens zwei Elementarstrukturen (13 und 14) nach Anspruch 1 oder 7 mit jeweils zwei Zwischenflächen (8, 9) in Serienanordnung umfaßt, wobei der Leiter der einen mit dem erweiterten Ende der zweiten verbunden ist.

10. Gruppe nach Anspruch 9, dadurch gekennzeichnet, daß mehrere Elementarstrukturen (14 bis 16) mit zwei Zwischenflächen (8, 9) am erweiterten Ende einer gemeinsamen Elementarstruktur (13) mit zwei Zwischenflächen (8, 9) parallel angeordnet sind.

Fig. 1

Fig. 2

Fig. 3

Fig. 3a

Fig. 4

Fig. 5

Fig. 6